# EUROPÄISCHE PATENTSCHRIFT

(11) **EP 0 949 467 B1**
(45) Veröffentlichungstag und Bekanntmachung des Hinweises auf die Patenterteilung: **17.12.2003**
(21) Anmeldenummer: 99106803.2
(22) Anmeldetag: 06.04.1999
(51) Int. Cl.: F25D 11/02, F25D 29/00

(54) **Verfahren zur Steuerung eines Kältegerätes**
Refrigerator control method
Procédé de commande pour réfrigérateur

(30) Priorität: 07.04.1998 DE 19815644
(43) Veröffentlichungstag der Anmeldung: 13.10.1999
(73) Patentinhaber: BSH Bosch und Siemens Hausgeräte GmbH, 81669 München (DE)
(72) Erfinder: Guffler, Thomas, Dipl.-Ing., 89426 Wittislingen (DE); Joksch, Harald, Dipl.-Ing., 89269 Vöhringen (DE)

(56) Entgegenhaltungen:
- EP-A- 0 388 726
- EP-A- 0 484 860
- DE-A- 19 510 268

## Beschreibung

Die Erfindung betrifft ein Verfahren zur Steuerung eines Kältegerätes nach dem Oberbegriff des Anspruchs 1. So ein Verfahren ist aus der EP-A-0 484 860, der DE-A-19510268 oder der EP-A-0 388 726 bekannt.

Bei Kältegeräten, wie beispielsweise Kühl- und Gefrierkombinationen, ist es üblich, die zur Kühlung der Fächer dienenden Verdampfer in einem sogenannten Einkreiskältesystem anzuordnen. Die bestimmungsgemäße Temperatur in beiden Kältefächem wird dabei üblicherweise durch einen einzigen, im Kühlfach vorgesehenen Temperaturregler gesteuert, so daß über den an sich die Kühlfachtemperatur beeinflußenden Temperaturregler indirekt auch die Temperatur im Gefrierfach bestimmt ist. Ein derartige Regelung ist dann problematisch, wenn die Umgebungstemperatur der Kühl- und Gefrierkombination niedrige Werte angenommen hat, so daß ein Temperaturanstieg im Kühlfach, bedingt durch den natürlichen Wärmeeinfall, nur sehr langsam erfolgt und somit der durch den Temperaturregler angesteuerte Kältemittelverdichter über einen längeren Zeitraum außer Betrieb ist. Dies kann unter Umständen zur Folge haben, daß die bestimmungsgemäße Temperatur im Gefrierfach über unzulässig hohe Werte ansteigt und somit das dort eingelagerte Gefriergut gegebenenfalls Schaden nimmt. Um diesem Umstand entgegenzuwirken, ist man dazuübergegangen, im Kühlfach Heizelemente z.B. in Form von Heizdrähten oder Glühlampen oder dergleichen einzusetzen, um bei kalten Umgebungstemperaturen einen schnelleren Temperaturanstieg im Kühlfach bewirken zu können. Dabei sind die Heizelemente entweder manuell über einen als sogenannten "Winter-Switch" bezeichneten Schalter durch die Bedienperson des Gerätes oder über einen die Umgebungstemperatur des Gerätes erfassenden Temperatursensors in Betrieb nehmbar. Für den Fall der Inbetriebnahme anhand des manuell zu bedienenden Schalters besteht die Gefahr, daß die Bedienperson das Zu- bzw. Abschalten der Heizung vergißt, so daß im ersteren Fall die Temperatur im Gefrierfach ansteigt und das Gefriergut gegebenenfalls Schaden nimmt, während im letzteren Fall die Energieaufnahme des Gerätes unnötig erhöht ist. Die Zuschaltung der Heizung in Abhängigkeit der Umgebungstemperatur bringt mit sich, daß die Heizung immer dann in Betrieb ist, wenn die Umgebungstemperatur des Gerätes eine vorbestimmte Schalttemperatur unterschreitet, jedoch der Kältemittelverdichter infolge des auf Reglerstellung "Kalt" eingestellten Temperaturregler oder infolge von in das Kühlfach frisch eingelagertem Lagergut an sich eine ausreichende Laufzeit zur Erreichung der bestimmungsgemäßen Fachtemperaturen aufweist und eine zusätzliche Ansteuerung, bedingt durch die erfaßte Umgebungstemperatur, überflüssig ist.

Der Erfindung liegt die Aufgabe zugrunde, ein Verfahren zur Steuerung eines Kältegerätes gemäß dem Oberbegriff des Anspruches 1 mit einfachen Mitteln derart zu verbessem, daß die Nachteile des Standes der Technik vermieden sind.

Diese Aufgabe wird durch das Verfahren gemäß Anspruch 1 gelöst.

Durch die erfindungsgemäße Ansteuerung der Heizung erfolgt deren Betriebsweise in sehr hohem Maße bedarfsgerecht, da die Ansteuerung der Heizung ausschließlich auf betriebsspezifische Gerätekennwerte, wie die Laufzeit, die Stehzeit und die sich aus dem Verhältnis der Laufzeit zur Summe aus Laufzeit und Stehzeit sich ergebende relative Einschaltdauer (RED) des Verdichters abgestellt ist und somit Fremdeinflüsse wie z.B. das Einwirken einer Bedienperson oder die Einlagerung von warmem Kühlgut im Kühlfach bzw. eine auf niedrige Betriebstemperaturen im Kühlfach eingestellte Reglereinstellung finden demzufolge bei der erfindungsgemäßen Heizungssteuerung Berücksichtigung, während derartige Betriebsfälle des Kühlfaches bei einer Temperaturerfassung der Umgebungstemperatur des Gerätes unberücksichtigt blieben. Durch die Abstellung der Heizungsansteuerung auf die betriebsspezifischen Gerätekennwerte, wie die Steh- und die Laufzeit des Verdichters oder dessen relative Einschaltdauer ist eine energieoptimierte Betriebsweise des Kältegerätes gewährleistet, da die Heizung nicht unnötig in Betrieb gesetzt ist und somit der Verdichter in sehr hohem Maße bedarfsgerecht angesteuert ist. Mit der auf den betriebsspezifischen Gerätekennwerten basierenden Heizungsansteuerung ist jederzeit sichergestellt, daß die bestimmungsgemäße Fachtemperaturen des Kältegerätes auch bei Geräteumgebungstemperaturen von 10°C stets sicher eingehalten ist.

Nach der Erfindung ist vorgesehen, daß die Ansteuereinheit bei der Auswertung der Betriebsweise des Verdichters dessen Stehzeit aufsummiert und bei Überschreiten des Sollwertes die Heizeinrichtung zu ihrer Inbetriebnahme ansteuert.

Die Auswertung der Verdichterstehzeit läßt einen unmittelbaren Rückschluß auf die im geregelten Kältefach und somit auch im ungeregelten Kältefach eingebrachte Kälteleistung, so daß auf einfache Weise die bestimmungsgemäße Temperatur im ungeregelten Kältefach sichergestellt ist.

Entsprechend dem Gegenstand der Erfindung ist vorgesehen, daß die Ansteuereinheit bei einer vorbestimmten Verdichterstehzeitsumme die Heizeinrichtung einschaltet und bei einer um einen Zeitabschnitt verringerten zweiten vorbestimmten Verdichterstehzeitsumme die Heizeinrichtung außer Betrieb nimmt.

Ein derartige Ansteuerung der Heizeinrichtung stellt unter Einhaltung der bestimmungsgemäßen Fachtemperatur im ungeregelten Kältefach sicher, daß sowohl der Verdichter als auch die Heizeinrichtung nicht unnötig lang in Betrieb gesetzt ist, und somit der Energieverbrauch des Kältegerätes hinsichtlich der nach dem Stand der Technik zur Anwendung gekommenen Ansteuertechniken für die Heizeinrichtung deutlich verringert ist.

Bereits gute Ergebnisse hinsichtlich der Aufrechterhaltung der bestimmungsgemäßen Lagertemperatur im ungeregelten Kältefach und bezüglich eines deutlich verminderten Energieverbrauches des Kältegerätes haben sich ergeben, wenn nach einer letzten bevorzugten Ausführungsform des Gegenstandes der Erfindung vorgesehen ist, daß die das Einschalten der Heizeinrichtung bewirkende Verdichterstehzeitsumme zwischen 55 Minuten und 75 Minuten liegt, vorzugsweise aber 65 Minuten beträgt und die das Abschalten bewirkende, um den Zeitabschnitt verringerte zweite Verdichterstehzeitsumme zwischen 50 Minuten und 70 Minuten liegt, vorzugsweise aber 60 Minuten beträgt.

Die Ansteuerung der Heizungseinrichtung basierend auf den aus der Betriebsweise des Verdichters sich ergebenden Kennwerten zur Temperaturregelung des bei Kühlund Gefrierkombinationen mit einem Einkreiskältesystem indirekt temperaturgeregelte Gefrierfach trägt, den auf die bestimmungsgemäße Fachtemperatur des ungeregelten Kältefaches einflußnehmenden Faktoren sehr zielgerichtet Rechnung, da die Heizung und damit der Verdichter in Abhängigkeit von Gerätekenngrößen gesteuert ist, die eine unmittelbare Aussagekraft über das im ungeregelten Kältefach herrschende Temperatumiveau zu lassen. Durch die Auswertung der Verdichterstehzeit ist es möglich, auch die Reglerstellung des im wärmeren Kühlfach angeordneten Temperaturreglers bei der Heizungsansteuerung mit in Betracht zu ziehen, so daß eine Ansteuerung der Heizungseinrichtung bei einem auf niedrige Temperaturen im Kühlfach eingestellten Temperaturregler unterbleibt, da bei einer derartigen Temperaturreglereinstellung die damit verbundenen Verdichterlaufzeiten bereits ausreichend sind, um das an sich ungeregelte Gefrierfach auf seiner bestimmungsgemäßen Temperatur zu halten. Ebenso findet bei der Auswertung der betriebsspezifischen Verdichterwerte des als Kühl- und Gefrierkombination ausgebildeten Kältegerätes die Einlagerung von warmen, die Inbetriebnahme des Kältemittelverdichters initiierenden Lagergutes Berücksichtigung. Neben der Auswertung der Verdichterstehzeit zur Ansteuerung der Heizungseinrichtung ist es genausogut möglich, anstelle dieser die Laufzeit des Verdichters oder aber auch dessen relative Einschaltdauer, welche sich aus der im Verhältnis seiner Laufzeit zu der Summe aus seiner Laufzeit und seiner Stehzeit ergibt, zur Ansteuerung der Heizungseinrichtung und damit zur indirekten Temperaturregelung des an sich ungeregelten Kältefach heranzuziehen.

## Patentansprüche

1. Verfahren zur Steuerung eines Kältegerätes mit wenigstens zwei thermisch voneinander getrennten unterschiedlicher Fachtemperatur und mit einem Verdichter, welcher wenigstens zwei in Reihenschaltung hintereinander angeordnete, zur Kühlung der Kältefächer dienende Verdampfer mit Kältemittel beaufschlägt und welcher von einem in einem Fach höherer Temperatur angeordneten Reglerelement zur Aufrechterhaltung der bestimmungsgemäßen Fachtemperatur gesteuert ist, von denen die Fachtemperatur im Fach höherer Temperatur von einem Heizelement beeinflußbar ist, wobei eine elektronische Ansteuereinheit vorgesehen ist, welche wenigstens einen in einem Datenspeicher hinterlegten Sollwert mit einem sich aus der Betriebsweise des Verdichters ergebenden Istwert vergleicht und beim Unter- oder Überschreiten des Sollwertes ein Steuersignal abgibt, durch welches die Heizeinrichtung in Betrieb gesetzt ist, **dadurch gekennzeichnet, daß** die Ansteuereinheit bei einer vorbestimmten Verdichterstehzeitsumme die Heizeinrichtung einschaltet und bei einer um einen Zeitabschnitt verringerten zweiten Verdichterstehzeitsumme abschaltet.

2. Verfahren nach Anspruch 1, **dadurch gekennzeichnet, daß** die erste Verdichterstehzeitsumme in einem Bereich zwischen 55 und 75 Minuten liegt, aber vorzugsweise 65 Minuten beträgt und die um den Zeitabschnitt verringerte zweite Verdichterstehzeitsumme in einem Bereich zwischen 50 und 70 Minuten liegt, aber vorzugsweise 60 Minuten beträgt.

## Claims

1. Method of controlling a refrigerating appliance with at least two different compartment temperatures thermally separated from one another and with a compressor, which loads with refrigerant at least two evaporators arranged one after the other in series connection and serving for cooling of the refrigerating compartments and which is controlled by a regulator element, which is arranged in a compartment of higher temperature, for maintenance of the intended compartment temperature, of which the compartment temperature in the compartment of higher temperature can be influenced by a heating element, wherein an electronic control unit is provided, which compares at least one target value, which is filed in a data memory, with an actual value, which results from the mode of operation of the compressor, and when the target value is fallen below or exceeded delivers a control signal by which the heating device is placed in operation, **characterised in that** the control unit switches on the heating device in the case of a predetermined compressor standing time total and switches off the heating unit in the case of a second compressor standing time total reduced by a time segment.

2. Method according to claim 1, **characterised in that** the first compressor standing time total lies in a region between 55 and 75 minutes, but preferably amounts to 65 minutes, and the second compressor standing time total reduced by the time segment lies in a region between 50 and 70 minutes, but preferably amounts to 60 minutes.

## Revendications

1. Procédé pour commander un appareil de réfrigération avec au moins deux températures de compartiment différentes séparées l'une de l'autre au plan thermique et avec un compresseur, qui alimente en produit réfrigérant au moins deux évaporateurs disposés l'un derrière l'autre dans un montage en série servant au refroidissement des compartiments de réfrigération et qui est commandé par un élément régulateur disposé dans un compartiment de température supérieure pour le maintien de la température de compartiment réglementaire, par lesquels la température de compartiment dans le compartiment de température supérieure peut être influencée par un élément de chauffage, une unité d'amorçage électronique étant prévue, laquelle compare au moins une valeur théorique déposée dans une mémoire de données avec une valeur réelle résultant du mode d'exploitation du compresseur et émet un signal de commande lors du dépassement positif ou négatif de la valeur prescrite, par lequel l'appareil de chauffage est mis en service, **caractérisé en ce que** l'unité d'amorçage enclenche l'appareil de chauffage avec un total prédéfini de temps d'arrêt du compresseur et le déconnecte avec un second total de temps d'arrêt du compresseur qui est réduit d'une période de temps.

2. Procédé selon la revendication 1, **caractérisé en ce que** le premier total de temps d'arrêt du compresseur se situe dans une plage comprise entre 55 minutes et 75 minutes, mais est de préférence de 65 minutes et le second total du temps d'arrêt du compresseur, réduit de la période de temps, se situe dans une plage comprise entre 50 minutes et 70 minutes, mais est de préférence de 60 minutes.
